Europäisches Patentamt

European Patent Office

Office européen des brevets

(11) Publication number: **0 174 070**
**B1**

# EUROPEAN PATENT SPECIFICATION

(45) Date of publication of patent specification: **07.12.88**

(51) Int. Cl.⁴: **F 16 L 21/08,** F 16 L 37/14,
F 16 L 33/20

(21) Application number: **85304803.1**

(22) Date of filing: **05.07.85**

(54) Formed fluid coupling apparatus.

(30) Priority: **09.07.84 US 629059**

(43) Date of publication of application:
**12.03.86 Bulletin 86/11**

(45) Publication of the grant of the patent:
**07.12.88 Bulletin 88/49**

(84) Designated Contracting States:
**BE DE FR GB IT NL SE**

(56) References cited:
**AT-B- 335 236**
**AT-B- 343 426**
**DE-A-2 758 668**
**DE-A-2 942 120**
**US-A-4 240 654**

(73) Proprietor: **STRATOFLEX, INC.**
**220 Roberts Cut-Off**
**Fort Worth, Texas 76114 (US)**

(72) Inventor: **Vyse, Gerrard Nelson**
**813 Springlake Drive**
**Bedford Texas 76021 (US)**

(74) Representative: **Newstead, Michael John et al**
**Page & Co. Temple Gate House Temple Gate**
**Bristol BS1 6PL (GB)**

Courier Press, Leamington Spa, England.

## Description

The use of hose and/or metal tubes has been well known for many years, for making fluid flow connections in machines such as truck and automobile engines. Some systems include flexible hose made of synthetic rubber or plastic and fittings or couplings at the ends of the hose for making connections to other machine parts. In other systems, metal tubes have been used in place of the hose, and tubes have the advantage that they can be passed close to very hot machine parts. In truck and automobile engines, the flow mediums in such systems have been engine oil, transmission oil and fuel, for example.

Both types of systems, as used in the prior art on internal combustion engines, have disadvantages. Systems including flexible hose are relatively expensive because of the number of machined fittings or couplings that have been required at the ends of the hose. Further, hose should not be passed close to very hot engine parts. Systems including metal tubes have also been relatively expensive because they have included metal couplings that have been brazed to the tubes, which is an expensive operation.

Quick connect fittings or couplings have also been used in such systems. DE-A1-2 942 120 describes a coupling having a receptacle part with an annular groove in its interior surface and an expandable snap ring carried by the groove. Such arrangements as used in the prior art have had the disadvantages of being excessively expensive and/or not being easily and quickly assembled, particularly in locations where the connection must be made on a moving assembly line and the worker cannot easily view the parts during assembly. In other words, where "blind connections" must be performed, it is important that such connections be readily made.

According to the present invention there is provided apparatus for extending between and connecting first and second components, the first component including an insert part of a quick-connect coupling, and the apparatus including a receptacle part of this quick-connect coupling, which receptacle part has an annular inwardly open groove in its interior surface and an expandable snap ring carried by this groove and being for assembly with the first component which has an annular outwardly open groove in its outer surface which groove is in substantial radial alignment with the inwardly-open groove of the receptacle part with the ring extending between the two grooves in the assembled condition of the coupling; characterised in that: the apparatus comprises an elongate metal tube formed by a circular wall having a substantially constant radial thickness, this tube having first and second ends; in that the receptacle part is mechanically formed on and integral with the tube with the annular inwardly open groove formed on the interior surface of the wall of the tube, the receptacle part constituting first coupling means on said first end of the tube, this first coupling means also including the ring; in that the groove has a larger diameter than the unexpanded diameter of the ring whereby the ring may be expanded outwardly in the groove; in that the apparatus further comprises second coupling means mechanically formed on and integral with said second end of the tube, this second coupling means being adapted to be attached to the second component; and in that an elongate portion of the tube between said first and second ends of the tube is shaped for extending between the first and second components.

The invention also provides a method of constructing a fluid flow connection between first and second components of which the first component includes an insert part of a quick-connect coupling that includes a receptacle part having an inwardly open groove in its interior surface and an expandable snap ring carried by this groove, the receptacle part being for assembly with the first component which has an annular outwardly open groove in its outer surface which groove is in substantial radial alignment with the inwardly open groove of the receptacle part with the ring extending between the two grooves in the assembled condition of the coupling; characterised in that: the fluid flow connection utilises an elongate metal tube formed by a circular wall having a substantially constant radial thickness, this tube having first and second ends; and in that the method comprises the steps of mechanically forming the receptacle part integrally with the first end of the tube to constitute first coupling means that also includes the ring, forming the inwardly open groove in the interior surface of the wall of the tube, mounting the ring in the groove, mechanically forming second coupling means integrally with the second end of the tube, this second coupling means being formed to be attached to the second component, and bending the portion of the tube between said ends so as to extend between the first and second components.

The invention provides a low cost assembly for making fluid connections. The length of tubing can be thin-walled and hence is an inexpensive component, and by utilising mechanical forming expensive machining operations are avoided. Not only is thin-walled tubing less expensive than hose, it may be run close to a hot engine part or a battery which may damage an ordinary hose.

For a better understanding of the invention and to show how the same may be carried into effect, reference will now be made, by way of example, to the accompanying drawing, in which:

Fig. 1 is a view partially in section of apparatus extending between first and second components;

Fig. 2 is a fragmentary sectional view showing parts of the apparatus of Fig. 1 in fully assembled positions.

Fig. 3 is a enlarged end view of part of the apparatus; and

Fig. 4 shows an alternate construction of part of the apparatus.

### Detailed Description of the Drawings

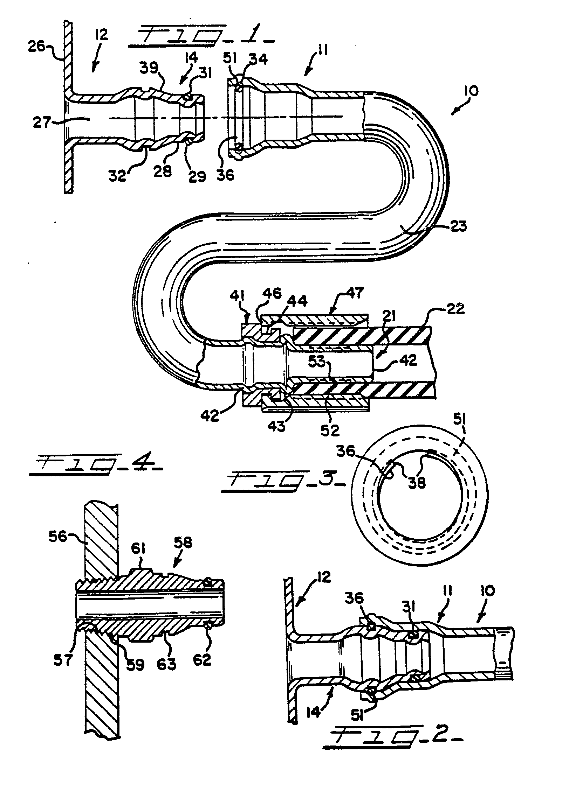

With specific reference to Fig. 1, apparatus in accordance with the present invention comprises a generally tubular member indicated by the numeral 10 that has a substantially round cross section. One end of the member 10 is shaped in the form of a part 11 of a quick-connect coupling or fitting which is adapted to be attached to a component indicated generally by the numeral 12. The quick-connect coupling has two parts, the part 11 which is formed integrally with the member 10 and another part 14 which is attached to the component 12. The member 10 further includes a second end 21 which is mechanically formed as will be described hereinafter to be attached to another component. In the present specific example, the other component comprises a length of flexible hose 22 made of rubber, synthetic rubber or plastic, for example.

Between the two ends, the member 10 includes a center portion 23 which is shaped or bent in such a manner as to interconnect the two components 12 and 22.

The component 12 may comprise, for example, the oil cooler, oil filter, or transmission oil cooler of an internal combustion engine. The component 12 in this example includes a sheet metal housing 26 having a tubular flow passage 27 formed therein. The flow passage 27 in the present example is formed by the insert part 14 of the coupling, the part 14 having a stepped outer surface 28. The right-hand end of the surface 28 is reduced and an annular seal groove 29 is formed adjacent the right-hand end thereof, an O-ring seal 31 being mounted in the groove 29. Spaced rearwardly, or to the left, of the groove 29 is an inner annular snap ring groove 32 which is formed in a radially enlarged section of the part 14.

The coupling part 11 formed on the end of the member 10 is shaped to form a receptacle for the insert part 14. The inner periphery of the part 11 has an outer annular groove 34 formed therein and an annular snap ring 36 (Figs. 1 and 3) is mounted in the groove 34. When the insert part 14 is moved into the receptacle part 11, as shown in Fig. 2, the two grooves 32 and 34 are substantially in radial alignment and the snap ring 36 is located in the two grooves 32 and 34, thereby preventing disassembly of the two parts 11 and 14. The O-ring 31 engages the internal surface of the part 11 adjacent the forward end of the part 14 and thus forms a fluid tight seal between the two parts 11 and 14.

As shown in Fig. 3, the snap ring 36 is split, thereby forming a gap having ends 38, and the ring 36 is preferably made of a spring metal. The ring 36 is sized such that its internal diameter, when in the unflexed state shown in Fig. 3, is larger than the diameter of the forward end portion of the part 14 but substantially equal to the diameter of the bottom of the groove 32. When the part 14 is inserted into the opening of the part 11, the ring 36 engages a sloped or ramped surface 39 of the part 14, causing the ring 36 to expand to the diameter of the enlarged part, until the ring 36 snaps into the inner groove 32 as shown in Fig. 2.

The other end 21 of the member 10 is mechanically formed to be connected to the hose 22. For this purpose, the diameter of the end 21 is reduced to approximately the inner diameter of the hose 22. A ring or collar 41 is positioned around the end 21 at a location which is spaced from the endmost surface 42, the internal diameter of the collar 41 approximating the outer diameter of the member 10. The end portion 21 is mechanically formed or "bumped" to produce beads 42 and 43 on opposite sides of the ring 41 in order to secure the ring against longitudinal movement relative to the member 10. A groove 44 is formed in the outer periphery of the ring 41 which receives a flange 46 of a sleeve 47, the sleeve 47 being radially spaced from and encompassing the end portion of the member 10. Prior to final assembly, the hose 22 is positioned over the end 21 and up against the bead 43 and within the sleeve 47, and then the sleeve 47 is deformed radially inwardly as by a crimping or swaging operation. This latter operation both forces the flange 46 into the groove 44 in order to secure the ring 41 and the sleeve 47 together, and it radially compresses the end of the hose 22 between the sleeve 47 and the end 21 of the member 10, thereby firmly securing and sealing the member 10 to the hose 22.

The center portion 23 of the member 10 is bent in whatever form is necessary to enable the ends 11 and 21 to interconnect with the components 12 and 22.

The end 11 and the end 21 of the member 10 are both shaped by mechanically forming or shaping them such as to enable them to be connected to the components 12 and 22 without the need for further fittings or brazing operations. By the term "mechanically forming" or "mechanically shaping", it is meant that the parts are deformed to the required configuration with no machining operations or with a minimum of such machining. The part 11 may be mechanically formed by first expanding the end and producing the stepped inner opening and the groove 34 as by a rolling operation. Thereafter, the ring 36 is radially compressed slightly to enable it to be inserted into the groove 36, as shown in Fig. 3.

The groove 34 is at least partially filled with a relatively viscous fluid 51, such as grease, which holds the ring 36 in a substantially centered position in the groove 34, as shown in Fig. 3, prior to final assembly of the two parts 11 and 14. This arrangement has the advantage that it prevents the ring 36 from moving to one side of the groove 34 prior to final assembly and thereby obstructing the movement of the part 14 into the opening of the part 11.

As previously mentioned, the other end 21 is also mechanically formed and does not include brazed or threaded connections with the center portion 23 of the member 10. The endmost portion is reduced in diameter slightly to enable it to be inserted into the hose 22 and the beads 42 and 43 are formed by a mechanical bumping operation. The ring 41 and the sleeve 47 may also be shaped by a mechanical rolling operation. External teeth or ribs 52 may be formed as by a rolling operation on the outer surface of the end 21 and similar ribs or teeth 53 may be formed on the internal surface of the sleeve 47 in order to enhance the gripping and sealing functions of these parts.

Fig. 4 illustrates an alternative coupling part that may be provided in place of the part 14. Where the component is not made of sheet metal as in the case of the component 12 but instead includes a relatively thick housing wall 56 as shown in Fig. 4, the wall 56 may be provided with an internally threaded hole 57 that threadedly receives a coupling part 58. The part 58 has external teeth 59 formed thereon which engage the teeth 57, and hexagonal sides 61 may be provided to facilitate screwing the part 58 into the hole 57. A O-ring groove 62 and a snap ring groove 63 may also be machined on the outer periphery of the part 58. The exterior contour of the part 58 is essentially the same as the contour of the part 14 so that it may mate with the end part 11.

It will be apparent from the foregoing that apparatus in accordance with this invention has important advantages. The member 10 is attachable to two components and nevertheless it may be inexpensively constructed by mechanical shaping operations. The end part 11 is attachable to the part 14 by simply pressing the two parts together. The viscous fluid 51 in the groove 34 assures a problem free connection even when a "blind connection" is being made, because the fluid holds the ring 36 generally centered in the groove 34.

In prior art systems wherein two coupling parts are screwed together to make a connection, the twisting of the parts as they are assembled sometimes leaves residual stresses in the parts which can lead to premature failure due to fatigue. This problem is avoided when using apparatus according to this invention.

It should be obvious that the end 21 may be shaped similarly to the part 11 and be connected to a different component than the hose 22. While the coupling part 11 may have the shape of the insert part 14, it is preferred that it be the receptacle part as shown.

Attention is drawn to the co-pending application Publication No. EP-A-0 168 223 of even date which claims a quick-connect coupling female component having a groove receiving an expandable split ring and containing grease. A method of positioning the ring is also claimed therein.

## Claims

1. Apparatus for extending between and connecting first and second components (12, 22), the first component (12) including an insert part (14) of a quick-connect coupling, and the apparatus including a receptacle part (11) of this quick-connect coupling, which receptacle part (11) has an annular inwardly open groove (34) in its interior surface and an expandable snap ring (36) carried by this groove and being for assembly with the first component (12) which has an annular outwardly open groove (32) in its outer surface which groove (32) is in substantial radial alignment with the inwardly-open groove (34) of the receptacle part (11) with the ring (36) extending between the two grooves (34, 32) in the assembled condition of the coupling; characterised in that: the apparatus comprises an elongate metal tube (10) formed by a circular wall having a substantially constant radial thickness, this tube (10) having first and second ends; in that the receptacle part (11) is mechanically formed on and integral with the tube (10) with the annular inwardly open groove (34) formed on the interior surface of the wall of the tube (10), the receptacle part (11) constituting first coupling means on said first end of the tube, this first coupling means also including the ring (36); in that the groove (34) has a larger diameter than the unexpanded diameter of the ring (36) whereby the ring may be expanded outwardly in the groove (34); in that the apparatus further comprises second coupling means (21, 41, 47) mechanically formed on and integral with said second end of the tube (10), this second coupling means being adapted to be attached to the second component; and in that an elongate portion of the tube (10) between said first and second ends of the tube is shaped for extending between the first and second components.

2. Apparatus as claimed in Claim 1, wherein a relatively viscous fluid (51) at least partially fills the inwardly open groove (34) around the ring (36).

3. Apparatus as claimed in Claim 2, wherein the fluid (51) comprises grease.

4. Apparatus as claimed in Claim 1, 2 or 3, wherein the second component (22) is a flexible hose to which the second coupling means (21, 41, 47) is adapted to be attached.

5. A method of constructing a fluid flow connection between first and second components (12, 22), of which the first component (12) includes an insert part (14) of a quick-connect coupling that includes a receptacle part (11) having an inwardly open groove (34) in its interior surface and an expandable snap ring (36) carried by this groove, the receptacle part (11) being for assembly with the first component (12) which has an annular outwardly open groove (32) in its outer surface which groove (32) is in substantial radial alignment with the inwardly open groove (34) of the receptacle part (11) with the ring (36) extending between the two grooves (34, 32) in the assembled condition of the coupling; characterised in that: the fluid flow connection utilises an elongate metal tube (10) formed by a circular wall having a substantially constant radial thickness, this tube (10) having first and second ends; and in that the method comprises the steps of mechanically forming the receptacle part (11) integrally with the first end of the tube (10) to constitute first coupling means that also includes the ring (36), forming the inwardly open groove (34) in the interior surface of the wall of the tube (10), mounting the ring (36) in the groove (34), mechanically forming second coupling means (21, 41, 47) integrally with the second end of the tube (10), this second coupling means being formed to be attached to the second component (22), and bending the portion of the tube (10) between said ends so as to extend between the first and second components (12, 22).

6. A method as claimed in Claim 5 and including the further step of mechanically forming the insert part (14) on the first component (12).

7. A method as claimed in Claim 5 or 6 and including the step of positioning a viscous fluid (51) in the inwardly open groove (34) around the ring (36).

**Patentansprüche**

1. Vorrichtung zur Anbringung zwischen und Verbinden von einer ersten und einer zweiten Komponente (12, 22), wobei die erste Komponente (12) einen Einsetzabschnitt (14) einer Schnellkupplung umfaßt und die Vorrichtung einen Aufnahmeabschnitt (11) der Schnellkupplung umfaßt, der eine ringförmige, nach innen offene Nut (34) auf seiner Innenfläche und einen dehnbaren Schnappring (36), gehalten in der Nut, aufweist und zum Zusammenbau mit der ersten Komponente (12) ausgebildet ist, die eine ringförmige, nach außen offene Nut (32) an ihrer Außenumfangsfläche aufweist, welche im wesentlichen in radialer Flucht mit der nach innen offenen Nut (34) des Aufnahmeabschnittes (11) im zusammengebauten Zustand der Kupplung steht, wobei der Ring (36) sich zwischen den beiden Nuten (34, 32) in diesem Zustand erstreckt, dadurch gekennzeichnet, daß die Vorrichtung ein langgestrecktes Metallrohr (10) umfaßt, das durch eine kreisförmige Wand mit im wesentlichen konstanter radialer Dicke gebildet ist, wobei das Rohr (10) ein erstes und ein zweites Ende aufweist; daß der Aufnahmeabschnitt (11) mechanisch auf und einstückig mit dem Rohr (10) mit der nach innen offenen Nut (34) auf der Innenfläche der Wand des Rohres (10) ausgebildet ist, wobei der Aufnahmeabschnitt (11) erste Kupplungsmittel auf dem ersten Ende des Rohres bildet und die ersten Kupplungsmittel auch den Ring (36) beinhalten; daß die Nut (34) einen größeren Durchmesser aufweist als der ungestreckte Durchmesser des Rings (36), wodurch der Ring nach außen in die Nut (34) ausgedehnt werden kann; daß die Vorrichtung weiterhin zweite Kupplungsmittel (21, 41, 47) umfaßt, die mechanisch auf und einstückig mit dem zweiten Ende des Rohres (10) ausgebildet sind, wobei die zweiten Kupplungsmittel zur Anbringung an der zweiten Komponente ausgebildet sind; und daß ein langgestreckter Abschnitt des Rohres (10) zwischen dem ersten und dem zweiten Ende des Rohres so geformt ist, daß er sich zwischen der ersten und der zweiten Komponente erstrecken kann.

2. Vorrichtung nach Anspruch 1, wobei eine relativ viskose Flüssigkeit (51) mindestens teilweise die nach innen offene Nut (34) ringsum den Ring (36) ausfüllt.

3. Vorrichtung nach Anspruch 2, wobei das Fluid (51) ein Schmierfett umfaßt.

4. Vorrichtung nach einem der Ansprüche 1, 2 oder 3, wobei die zweite Komponente (22) ein flexibler Schlauch ist, an welchen die zweiten Kupplungsmittel (21, 41, 47) anbringbar sind.

5. Verfahren zur Herstellung einer Flüssigkeits-Strömungsverbindung zwischen einer ersten und einer zweiten Komponente (12, 22), wobei die erste Komponente (12) einen Einsetzabschnitt (14) einer Schnellkupplung aufweist, die einen Aufnahmeabschnitt (11) mit einer nach innen offenen Nut (34) in ihrer Innenfläche und einen dehnbaren Schnappring, (36) getragen in der Nut, umfaßt, wobei der Aufnahmeabschnitt (11) zum Zusammenbau mit der ersten Komponente (12) ausgebildet ist, die eine ringförmige nach außen offene Nut (32) an ihrer Außenfläche aufweist, welche im wesentlichen in radialer Flucht mit der nach innen offenen Nut (34) des Aufnahmeabschnittes (11) im zusammengebauten Zustand der Kupplung ist und sich dabei der Ring (36) zwischen den Nuten (34, 32) erstreckt, dadurch gekennzeichnet, daß die Flüssigkeits-Strömungsverbindung ein langgestrecktes Metallrohr (10) umfaßt, welches eine kreisförmige Wand mit im wesentlichen konstanter radialer Dicke aufweist, wobei das Rohr (10) ein erstes und ein zweites Ende umfaßt;

und daß das Verfahren einen Schritt umfaßt, bei welchem man den Aufnahmeabschnitt (11) einstückig mit dem ersten Ende des Rohres (10) zur Bildung erster Kupplungsmittel formt, die auch den Ring (36) einschließen, daß man die nach innen offene Nut (34) in der Innenfläche der Wand des Rohres (10) ausbildet, daß man den Ring (36) in der Nut (34) montiert, daß man mechanisch zweite Kupplungsmittel (21, 41, 47) einstückig mit dem zweiten Ende des Rohres (10) formt, wobei die zweiten Kupplungsmittel so geformt sind, daß sie an der zweiten Komponente (22) anbringbar sind, und daß man den Abschnitt des Rohres (10) zwischen seinen Enden so biegt, daß er sich zwischen der ersten und der zweiten Komponente (12, 22) erstreckt.

6. Verfahren nach Anspruch 5, wobei weiterhin ein Schritt vorgesehen ist, bei welchem man den Einsetzabschnitt (14) der ersten Komponente (12) mechanisch formt.

7. Verfahren nach Anspruch 5 oder 6, wobei ein Schritt vorgesehen ist, bei welchem man ein viskoses Fluid (51) in der nach innen offenen Nut (34) ringsum den Ring (36) anbringt.

**Revendications**

1. Dispositif destiné à s'étendre entre des premier et second éléments (12, 22) et à les relier, le premier élément (12) comprenant une partie mâle (14) d'un dispositif d'accouplement à raccordement rapide, et le dispositif comprenant une partie femelle (11) de ce dispositif d'accouplement à raccordement rapide, cette partie femelle (11) ayant une gorge (34) annulaire débouchant vers l'intérieur et ménagée dans sa surface intérieure et une bague à enclenchement rapide (36) expansible, portée par cette gorge et étant destinée à être montée sur le premier élément (12), qui a une gorge (32) annulaire débouchant vers l'extérieur et ménagée dans sa surface extérieure, cette gorge (32) étant sensiblement alignée radialement avec la gorge (34), débouchant vers l'intérieur, de la partie mâle (11), la bague (36) s'étendant entre les deux gorges (34, 32) lorsque le dispositif d'accouplement est monté; caractérisé en ce que: le dispositif comprend un tube (10) métallique oblong formé par une paroi circulaire ayant une épaisseur radiale sensiblement constante, ce tube (10) ayant des première et seconde extrémités; en ce que la partie femelle (11) est formée mécaniquement sur le tube (10) ou est d'une pièce avec celui-ci, la gorge (34) annulaire débouchant vers l'intérieur étant formée sur la surface intérieure de la paroi du tube (10), la partie femelle (11) constituant des premiers moyens d'accouplement à la première extrémité du tube, ces premiers moyens d'accouplement comprenant aussi la bague (36); en ce que la gorge (34) a un diamètre plus grand que le diamètre à l'état non expansé de la bague (36), la bague pouvant être expansée vers l'extérieur dans la gorge (34); en ce que le dispositif comprend en outre des seconds moyens d'accouplement (21, 41, 47) formés mécaniquement sur la seconde extrémité du tube (10) ou d'une pièce avec celle-ci, ces seconds moyens d'accouplement étant destinés à être fixés au second élément; et en ce qu'une partie oblongue du tube (10), comprise entre les première et seconde extrémités du tube, est conformée de manière à s'étendre entre les premier et second éléments.

2. Dispositif suivant la revendication 1, dans lequel un fluide (51) relativement visqueux remplit, au moins partiellement, la gorge (34) débouchant vers l'intérieur, qui est située autour de la bague (36).

3. Dispositif suivant la revendication 2, dans lequel le fluide (51) comprend de la graisse.

4. Dispositif suivant la revendication 1, 2 ou 3, dans lequel le second élément (22) est un tube flexible auquel les seconds moyens d'accouplement (21, 41, 47) sont destinés à être fixés.

5. Procédé de construction d'un raccord pour un écoulement de fluide entre des premier et second éléments (12, 22), le premier élément (12) comprenant une partie mâle (14) d'un dispositif d'accouplement à raccordement rapide, qui comprend une partie femelle (11) ayant une gorge (34) débouchant vers l'intérieur et ménagée dans sa surface intérieure, et une bague à enclenchement rapide (36) espansible, portée par cette gorge, la partie femelle (11) étant destinée à être montée sur le premier élément (12) qui a une gorge (32) annulaire débouchant vers l'extérieur et ménagée dans sa surface extérieure, cette gorge (32) étant sensiblement alignée radialement avec la gorge (34), débouchant vers l'intérieur, de la partie femelle (11), la bague (36) s'étendant entre les deux gorges (34 et 32), lorsque le dispositif d'accouplement est à l'état monté; caractérisé en ce que: le dispositif de raccordement pour l'écoulement d'un fluide utilise un tube (10) métallique oblong formé d'une paroi circulaire ayant une épaisseur radiale sensiblement constante, ce tube (10) ayant des premier et second extrémités; et en ce que le procédé comprend les stades qui consistent à former mécaniquement la partie femelle (11) d'une pièce avec la première extrémité du tube (10) pour constituer de premiers moyens d'accouplement qui englobent également la bague (36), à former la gorge (34) débouchant vers l'intérieur dans la surface intérieure de la paroi du tube (10), à monter la bague (36) dans la gorge (34), à former mécaniquement des seconds moyens d'accouplement (21, 41, 47) d'une pièce avec la seconde extrémité du tube (10), ces seconds moyens d'accouplement étant conformés de manière à être fixés au second élément (22), et à courber la partie du tube (10) comprise entre lesdites extrémités de manière à ce qu'elle s'étende entre les premier et second éléments (12, 22).

6. Procédé suivant la revendication 5, caractérisé en ce qu'il consiste, en outre, à former mécaniquement la partie mâle (14) sur le premier élément (12).

7. Procédé suivant la revendication 5 ou 6 et comprenant le stade qui consiste à mettre un fluide visqueux (51) dans la gorge (34) débouchant vers l'intérieur, tout autour de la bague (36).

FIG_1_

FIG_4_

FIG_3_

FIG_2_